# EUROPÄISCHE PATENTSCHRIFT

(11) **EP 0 463 448 B1**
(45) Veröffentlichungstag und Bekanntmachung des Hinweises auf die Patenterteilung: **30.03.1994**
(21) Anmeldenummer: 91109461.3
(22) Anmeldetag: 10.06.1991
(51) Int. Cl.: B01D 19/00, C02F 1/20

(54) **Verfahren und Apparat zur Aufwärmung und mehrstufigen Entgasung von Wasser**
Method and apparatus for heating and multiple effect degasification of water
Procédé et dispositif de chauffage et de dégazage à multiple effet de l'eau

(30) Priorität: 28.06.1990 CH 2162/90
(43) Veröffentlichungstag der Anmeldung: 02.01.1992
(73) Patentinhaber: ASEA BROWN BOVERI AG, 5400 Baden (CH)
(72) Erfinder: Blangetti, Francisco, CH-5400 Baden (CH); Eisenbeis, Hans, W-7891 Lienheim (DE); Youssef, Mustafa, CH-8046 Zürich (CH)

(56) Entgegenhaltungen:
- DE-B- 1 151 518
- FR-A- 1 167 397
- GB-A- 802 149

## Beschreibung

Die Erfindung betrifft ein Verfahren zum Aufwärmen und mehrstufigen Entgasen von Zusatzwasser mittels Dampf in einer Stromerzeugungsanlage, wozu Niederdruckdampf aus dem Kondensator der Stromerzeugungsanlage verwendet wird. Sie bezieht sich ebenfalls auf eine Kombination eines Kondensators einer Stromerzeugungsanlage und eines Apparates zur Durchführung des Verfahrens.

In modernen Kraftwerksanlagen ist der Verbrauch von Zusatzwasser sehr gross. So benötigen bereits klassische Kondensationsanlagen als Zusatzwasser normalerweise 1 bis 3% des gesamten zirkulierenden Massenstromes des Dampf-Kondensat-Kreislaufes. In Kombi-Anlagen jedoch, bei denen mit Hilfe von Dampfinjektion die Emission von Stickstoffoxyden reduziert wird, kann dieser Zusatzwasserverbrauch auf 20 bis 30% ansteigen. Dabei wird infolge der heutigen Anforderungen eine Entgasungsspanne des Zusatzwassers an O₂ von 10'000 ppb (Teile pro Milliarde), - d.h. Sättigungszustand des Wassers mit der athmosphärischen Luft bei Raumtemperatur - herunter auf 7 ppb bei einer gleichzeitigen Erwärmung um 20K und mehr verlangt.

Das einfache, - an sich bekannte und bei kleinen Wassermengen übliche - direkte Einsprühen von Zusatzwasser in den Kondensator würde aufgrund der genannten grossen Mengen zu einer Ueberflutung der Rohrbündel führen. Dies hätte eine schwere Beeinträchtigung der Funktion des Kondensators zur Folge und ist deswegen sowohl vom Kondensatorlieferanten als auch vom Kondensatorbetreiber nicht zugelassen. Ausserdem lässt sich auf diese Art nicht die gewünschte Aufwärmung und Entgasung erzielen.

Die Verwendung der allgemein bekannten Apparate zur Aufwärmung und Entgasung des Zusatzwassers führt normalerweise dazu, dass sich der für die Aufwärmung benutzte Dampf auf relativ hohem Energieniveau befindet. Man verwendet demnach ein Mittel, welches ohne weiteres in der Turbogruppe noch Arbeit verrichten könnte.

Bekannt im Zusammenhang mit der Entgasung von Flüssigkeiten sind ebenfalls Austauschsäulen bzw. Kolonnen, in denen der Dampf und die Flüssigkeit eines Gemisches im Gegenstrom, im Kreuz-Gegenstrom oder im Gleichstrom zueinander geführt werden (LUEGER, Band 16, Lexikon der Verfahrenstechnik, Vierte Auflage, Deutsche Verlags-Anstalt Stuttgart, Seite 51). In diesen Kolonnen werden die Flüssigkeit und der Dampf eines zu trennenden Gemisches so im Gegenstrom oder im Gleichstrom zueinander geführt, dass sich beide Phasen zum Stoffaustausch und zum Wärmeaustausch möglichst innig berühren. Die Verwendung einer Entgasersäule in Gegenstromschaltung ist zum Erzielen einer maximalen Trennarbeit bei einer bestimmten Säulenhöhe grundsätzlich richtig. Grössere Flüssigkeitsströme mit grösserer Unterkühlung bringen jedoch bei einer Gegenstromschaltung das Problem mit sich, dass ein sehr grosser Anteil des Dampfes den unteren Teil der Säule überwinden muss (Ueberflutung der Packung wegen grösserer Dampfbelastung), ohne signifikante Wirkung für die stoffkinetische Trennarbeit, die im unteren Teil der Säule geschieht, da die Aufwärmung und der Sättigungsprozess der Flüssigkeit im oberen Teil stattfinden. Die Folge einer solchen konstruktiven Lösung ist jedoch, dass der Durchmesser der Säule enorm erhöht werden muss, um die Ueberflutung der Packung zu verhindern, mit beträchtlichen Mehrkosten für den Apparat.

Schliesslich ist auch aus der EP-A-0 215 230 bekannt, zumindest im Zusammenhang mit dem Korrosionsproblem im Speisewasserstrang von Dampfturbinenanlagen, eine Nachentgasung des Kondensates vorzunehmen durch Dampfeinblasen im Hotwell unter dem Wasserniveau. Für die Dampfeinblasung ist dabei eine genügend grosse Kondensatüberdeckung sowie eine genügend feine Dampfverteilung im Kondensat erforderlich.

Unter Zugrundelegung der Erkenntnis, dass die Wärme des im Kondensator einer Stromerzeugungsanlage anfallenden Abdampfes in der Regel als unerwünschtes Abfallprodukt betrachtet wird, liegt der Erfindung die Aufgabe zugrunde, ein neues Verfahren unter Benutzung dieser Abwärme und einen dazugehörigen neuen Apparat mit sowohl grosser Aufwärmleistung als auch grosser Entgasungsleistung zu konzipieren.

Erfindungsgemäss wird dies bei einem mehrstufigen Verfahren mit den Merkmalen des Patentanspruchs 1 erreicht.

Eine Kombination eines Kondensators einer Stromerzeugungsanlage und eines Apparates zum Aufwärmen und mehrstufigen Entgasen von Zusatzwasser mittels Dampf zur Durchführung dieses Verfahrens besteht im wesentlichen aus
- einer an der Aussenwand des Kondensators der Stromerzeugungsanlage angeordneten und mit dem Kondensatorinnern über einen Dampfeinlass und einen Dampfauslass kommunizierenden Mischkammer, in welcher eine Mehrzahl von Wassereinspritzmitteln angeordnet ist, wobei der Dampfeinlass der Mischkammer gegen den Kondensatorhals öffnet;
- ferner aus einer unterhalb der Mischkammer und mit dieser verbundene, stehend angeordneten Trennsäule, welche an ihrem oberen Ende mit einem Wasserverteiler ausgerüstet ist, wobei in der Wandung der Trennsäule zwischen dem Wasserverteiler und den Elementen der Trennsäule eine Verbindung zum Kondensatorinnern abzweigt;
- sowie aus einem unterhalb der Trennsäule angeordneten und mit dieser verbundenen Sammelgefäss, in welchem Dampfzerteilungsmittel angebracht sind und welches über ein Wehr mit dem Kondensatorinnern verbunden ist.

Das neue Verfahren und der neue Entgasertyp zeichnen sich dadurch aus, dass im Gegensatz zu den herkömmlichen Methoden und Ausführungen der Kraftwerk-Wirkungsgrad gesteigert wird, da zur Aufwärmung und Entgasung zum überwiegenden Teil niederwertiger Abdampf verwendet wird, was den Kondensator entlastet.

Besonders günstig ist es, wenn die Mischkammer sich in Rohrlängsrichtung des Kondensators erstreckt und von zumindest annähernd zylindrischer Form ist, wobei sowohl ihre aus dem Kondensatorhals beaufschlagte Dampfeinströmung als auch ihre Dampfauströmung tangential ausgebildet sind. Durch diese hydrodynamische Ausbildung der Ein- und Auslassgeometrie der Mischkammer erfolgt die Rückführung des mit Inertgasen angereicherten Dampfes aus der Mischkammer in den Kondensator fortwährend und ohne fremdem Eingriff.

Zweckmässig ist es, wenn die Dampfzerteilungsmittel Zweiphasendüsen sind, die sowohl von vorzugsweise sauerstoffarmen Dampf als auch von rezirkuliertem Kondensat beaufschlagt sind. Damit kann der neue Apparat auch zum Reinigen des Kondensates beim Anfahren oder während des Betriebes der Kraftwerksanlage herangezogen werden, in dem einfach der für die Funktion der Zweiphasendüsen ohnehin erforderliche Kondensatmassenstrom erhöht wird.

In der Zeichnung ist anhand des kalten Endes einer Dampfturbinenanlage ein Ausführungsbeispiel der Erfindung schematisch dargestellt.
Es zeigen:

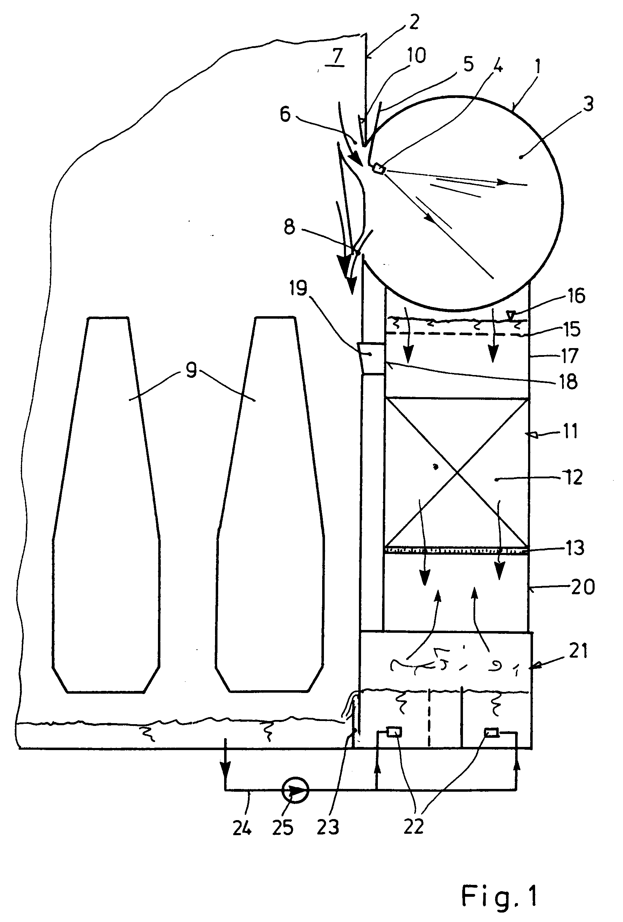

- Fig.1: einen Teilschnitt durch einen Kondensator mit integriertem Entgasungsapparat quer zur Längserstreckung der Kondensatorrohre;
- Fig.2: einen Teilschnitt durch den Entgasungsapparat in Längsrichtung der Kondensatorrrohre;
- Fig.3: einen Teilschnitt nach Linie III-III in Fig.2

Alle für das Verständnis der Erfindung unwesentlichen Anlageteile, wie beispielsweise der eigentliche Dampf- und Wasser-Kreislauf der Stromerzeugungsanlage, sind nicht dargestellt. Die Strömungsrichtungen der beteiligten Medien sind mit Pfeilen bezeichnet.

Obwohl Mischvorwärmer/Entgaser in Struktur und Funktion hinlänglich bekannt sind, sei deren Problematik und die hier gefundene Lösung der Mehrstufigkeit anhand eines unverbindlichen Zahlenbeispiels erläutert:
- Die Entgasung bei gleichzeitiger Aufwärmung, wie sie typischerweise in Kraftwerksanlagen auftritt, weist einige Besonderheiten auf. Zunächst verfügt man für die Aufwärmung des Zusatzwassers über gesättigten Niederdruckdampf, in der Regel Turbinenabdampf. Dieser weist eine Feuchte vom mehr als 10% auf und seine Temperatur beträgt normalerweise zwischen 20° und 50°C. Daher ist der vom unterkühlten Zusatzwasser abgesaugte Dampfmassenstrom, der in der Regel in einen Oberflächenkondensator einströmt, hauptsächlich durch die Unterkühlung des Zusatzwassers gegeben, bezogen auf die Sättigungstemperatur des Turbinenabdampfes. Mit andern Worten, es stellt sich im Entgaser ein natürlicher Beharrungszustand ein, der nur von den Zuständen und der Stärke der involvierten Ströme abhängt, ohne die Einwirkung eines Regelkreises zur Kontrolle der genannten Wirkgrössen.

Die Austreibung der in der Flüssigkeit gelösten Gase geschieht in einer ersten Stufe zunächst auf rein thermodynamischer Basis, da die Absenkung des Druckes durch die Versprühung und die Erhöhung der Temperatur des Zusatzwassers durch die Aufwärmung mit Dampf eine Verminderung der Sättigungswerte der gelösten Gase hervorruft (Sprudeleffekt). Dadurch übersteigt der Partialdruck der gelösten Gase den herrschenden Gesamtdruck. Bei der hier angestrebten Entgasungsspanne wird der grösste Teil des gesamthaft erforderlichen Dampfes für die Aufwärmung und Entgasung in dieser Stufe des Prozesses benötigt. Auf der Basis von einer Anfangskonzentration an O₂ von 10'000 ppb bei 20°C ergibt sich bei 100 mbar und 46°C Sättigungstemperatur ein Abbau der Konzentration auf etwa 1'800 ppb, wobei jedes kg Zusatzwasser für die Aufwärmung bis auf Sättigungstemperatur bereits etwa 0.050 kg trocken gesättigten Dampf benötigt. Die Entfernung des in der Gasphase vorliegenden Sauerstoffes nach dieser ersten Stufe wird durch Ablassen des mit Inertgasen angereicherten Restdampfstromes erreicht. Hierzu wird ein Anteil des in den Entgasungsraum eingeführten und mit den ausgetriebenen Gasen angereicherten Dampfes wieder zurück in den Kondensatorraum geleitet. Von dort wird er mittels des nicht dargestellten Absaugsystemes des Kondensators aus der Anlage heraus befördert. Im wesentlichen wird also in dieser ersten Stufe das Zusatzwasser von einem Grossteil der Gase, d.h Sauerstoff, jedoch auch Stickstoff und Kohlendioxyd dadurch befreit, dass das Zusatzwasser einem Niederdruck ausgesetzt wird und die entsprechenden Sättigungsbedingungen annimmt.

Der für diese erste Entgasungs- und Aufwärmstufe erforderliche Teilapparat sieht im wesentlichen folgendermassen aus: Es handelt sich um einen Zylinder 1, der sich horizontal liegend entlang der Kondensatorwand 2 erstreckt und an seinen beiden Enden mit Kesselböden verschlossen ist. Das Zylinderinnere bildet die eigentliche Mischkammer 3. In dieser Mischkammer 3 sind eine Vielzahl von Wassereinspritzmitteln in Form von Düsen 4 aufgereiht. Diese Düsen werden über eine gemeinsame Wasserleitung 5 versorgt. Ueber die Düsen wird das unterkühlte Zusatzwasser mit der hohen O₂-Konzentration in die Mischkammer eingesprüht. Der Zylinder ist durch zwei über die ganze Längserstreckung der Mischkammer verlaufende Oeffnungen mit dem Kondensatorinnern verbunden. Die obere Oeffnung bildet den Dampfeinlass 6 und ist gegen den nur teilweise dargestellten Kondensatorhals 7 gerichtet. Unmittelbar oberhalb dieser Oeffnung befindet sich innerhalb des Kondensators an dessen Wand ein Wandwasserabscheider in Form einer Rinne 10. Diese Rinne erstreckt sich über annähernd die gleiche Länge wie die Mischkammer; sie ist an beiden Enden offen, so dass das angesammelte Wasser von dort aus je nach Länge der Rinne entweder in die Mischkammer abläuft oder im Kondensatorinnern verbleibt. Auf jeden Fall vermag dieses Wandwasser die Funktion der Mischkammer nicht zu beeinträchtigen. Der strömungskonform ausgebildete Einlass 6 verläuft mischkammerseitig etwa tangential zum Zylinder.

Beim Eindüsen des Zusatzwassers entspannt sich dieses zunächst auf den in der Mischkammer herrschenden Kondensatordruck. Dabei erfolgt eine schlagartige Ausgasung dieses Wassers auf die obengenannte O₂-Konzentration von ca. 1'800 ppb (bei 100 mb).

Da das Zusatzwasser beträchlich kühler ist als die Sättigungstemperatur im Kondensator, wirkt das Zusatzwasser absaugend. Wie in einem Mischkondensator wird demnach der Turbinenabdampf durch den Dampfeinlass 6 in die Mischkammer 3 hineingesogen. Dieser Effekt wird noch durch zwei begleitende Faktoren verstärkt:
. zum einen bewirkt der entsprechend konfigurierte Dampfeinlass eine Umlenkung des einströmenden Dampfes mit anschliesendem Aufstau, welcher letzterer zu einer leichten Erhöhung des Mischkammerdruckes um ca. 1-1.5 mb führt.
. zum andern bewirkt auch die besondere Form des Einsprühens des Zusatzwassers einen "Schleppeffekt" bezüglich des Dampfes nach der Art einer Wasserstrahlpumpe.

Der grösste Teil des in die Mischkammer einströmende Dampfes kondensiert in direktem Kontakt mit dem Zusatzwasser. Die überschüssige Dampfmenge reichert sich während des thermischen Ausgleichvorgans mit inerten Gasen an. Sie wird in der Mischkammer umgelenkt und verlässt dieselbe über eine den Dampfauslass 8 bildende zweite Oeffnung. Diese zweite Oeffnung 8 ist in der Kondensatorwand unterhalb der ersten Oeffnung 6 angeordnet. Auch sie hat einen tangentialen Verlauf, zumindest an ihrem dem Kondensatorinnern zugekehrten Ende. Dadurch wird auch an dieser Stelle von der Hauptströmung, die sich zu diesem Zeitpunkt unmittelbar oberhalb der Rohrbündel 9 befindet, eine Saugwirkung auf das aus der Mischkammer austretende Gemisch ausgeübt.

Das in der Mischkammer verbleibende, versprühte und vermischte Zusatzwasser ist nunmehr - bei Kondensatordruck und Kondensatortemperatur - gesättigt und teilentgast.
- Der massgebende und schwierigere Anteil der Restentgasung geschieht in einer zweiten Stufe auf rein stoffkinetischer Basis durch diffusiven Transport der gelösten Gase über die Gas/Flüssigkeitsgrenzschicht. Dieser Transportprozess kann erst nach Erreichen eines thermischen Gleichgewichtes stattfinden. Der Arbeitsprozess dieser zweiten Stufe ist wesentlich aufwendiger als jener der ersten Stufe.

Ausgehend von einem gesättigten Zusatzwasser ist nunmehr die Verwendung eines Gas-Flüssigkeits-Kontaktapparates in Gegenstromschaltung zum Erzielen einer maximalen Trennarbeit sinnvoll. Benutzt wird vorzugsweise eine Trennsäule, für deren Betrieb indes eine geringe Menge hochwertigen Dampfes erforderlich ist. Diese Menge an sogenanntem Spüldampf beziffert sich auf ≦ 5% der gesamten für die Aufwärmung benötigten Dampfmenge.

Es sei darauf hingewiesen, dass die Verwendung von an sich bekannten, herkömmlichen Trennstufen wie Glockenböden, Jetböden oder perforierten Böden mit einem Druckverlust von ca. 1.5 mb je Trennstufe verbunden ist. Dies führt zu einer Erhöhung der Sättigungstemperatur und demzufolge zu einem Mehrverbrauch an hochwertigem Dampf. Besonders bei tiefen Vakua sind druckverlustarme Packungen mit etwa lediglich 1 - 1.5 mb Druckverlust pro Meter Packungshöhe vorzuziehen.

Im vorliegenden Beispiel ist die vertikal aufgestellte Trennsäule 11 eine sogenannte zylindrische Kolonne, welche im dargestellten Fall geschichtete Füllkörper enthält, nachstehend Packung 12 genannt. Dabei kann es sich um eine Schüttung handeln, also um eine sogenannte ungeordnete Füllung (random packing). Besser geeignet ist eine geordnete, reguläre Füllung (regular packing), welche die Vorzüge einer höheren Trennleistung bei geringerem Druckabfall durch homogen gezielte Verteilung bietet. Als Material für solche an sich bekannten Packungen können Edelstahl, Keramik oder Kunstoffgewebe verwendet werden, die sich alle durch eine gute Benetzbarkeit bei wässrigen Systemen auszeichnen. Diese Packung ist an ihrem untersten Ende durch einen Packungsrost 13 in der Kolonne gehalten.

Das teilweise entgaste Zusatzwasser, das aus dem verjüngten Austritt 14 der Mischkammer 3 nach unten in die Trennsäule rinnt, wird zunächst in einem nicht gezeigten umlaufenden Kragen gesammelt und dann in einen Verteiler 15 geleitet. Dieser Verteiler 15 ist oberhalb der Packung 12 vorgesehen. Es handelt sich dabei in der Regel um ein Kanalsystem, in welchem das herabrinnende aufgewärmte Wasser aufgefangen und über den zylindrischen Querschnitt der Kolonne verteilt wird oder im einfachsten Fall um eine perforierte Platte. In letzterem Fall dient der oberhalb des Verteilers stehende Wasserpegel, welcher durch das Niveaudreieck 16 bezeichnet ist, gleichzeitig als hydraulisches Schloss für den oben aus der Packung 12 ausströmenden Spüldampf.

Die Kolonne ist in Gegenstromschaltung konzipiert, d.h. das vorgewärmte und bereits teilweise entgaste Wasser strömt in der Säule nach unten und der Spüldampf strömt im Gegenstrom nach oben. In dieser Säule wird die restliche Gasmenge aus dem Wasser zum überwiegenden Teil eliminiert. Das Wasser strömt durch mehrere Schichten der Kolonne nach unten. In der Packung wird ebenfalls die restliche Unterkühlung des Wassers eliminiert. Hierfür ist nur ein kleiner Teil der Packungshöhe notwendig. Nach dem Erreichen des thermischen Gleichgewichtes, d.h. der Sättigungstemperatur findet der Entgasungsvorgang in der Säule auf rein stoffkinetischer Basis statt, wie bereits oben erwähnt.

Die erforderliche Höhe der Gegenstromsäule ist von der Eintrittskonzentration sowie von der gewünschten Austrittskonzentration des Wassers abhängig. Da durch die Gegenstromsäule nur ein kleiner Spüldampfmassenstrom nach oben gegen das nach unten fliessende Wasser strömt, ist keine Gefahr der Ueberflutung in der Trennsäule vorhanden.

Das Entfernen dieses Spüldampfes geschieht unmittelbar oberhalb der Packung 12. Hierzu ist in der Wandung 17 der Trennsäule zwischen dem mit einer stehenden Wassersäule bepackten Verteiler 15 und der Packung 12 eine Oeffnung 18 angebracht, von der eine Entlüftungsleitung 19 zum Kondensatorinnern abzweigt.

In dieser zweiten Stufe wird demnach die Entgasung im mittleren Konzentrationsbereich zwischen 1'800 und beispielsweise 80 ppb durchgeführt, wozu nur ein Bruchteil des insgesamt benötigten Dampfes herangezogen wird. Indessen muss dieser Dampf aus einem Druckniveau des Kreislaufes entnommen werden, welches über dem im zugehörigen Kondensator herrschenden Druckniveau liegt.

Wie dieser Spüldampf bereitsgestellt wird, sei anhand der Erläuterung der dritten Entgasungsstufe beschrieben. Im Gegensatz zu herkömmlichen Gegenstrom-Entgasungsapparaten wird dieser Spüldampf nämlich nicht unmittelbar unterhalb der Packung 12 eingespiesen.
- Das aus der Trennsäule 11 herabfliessende Zusatzwasser gelangt über ein zylindrisches Gehäuseteil 20 in ein unterhalb der Trennsäule angeordnetes und mit dieser verbundenes Sammelgefäss 21, in welchem Dampfzerteilungsmittel 22 vorgesehen sind und welches über ein Wehr 23 mit dem Kondensatorinnern verbunden ist.

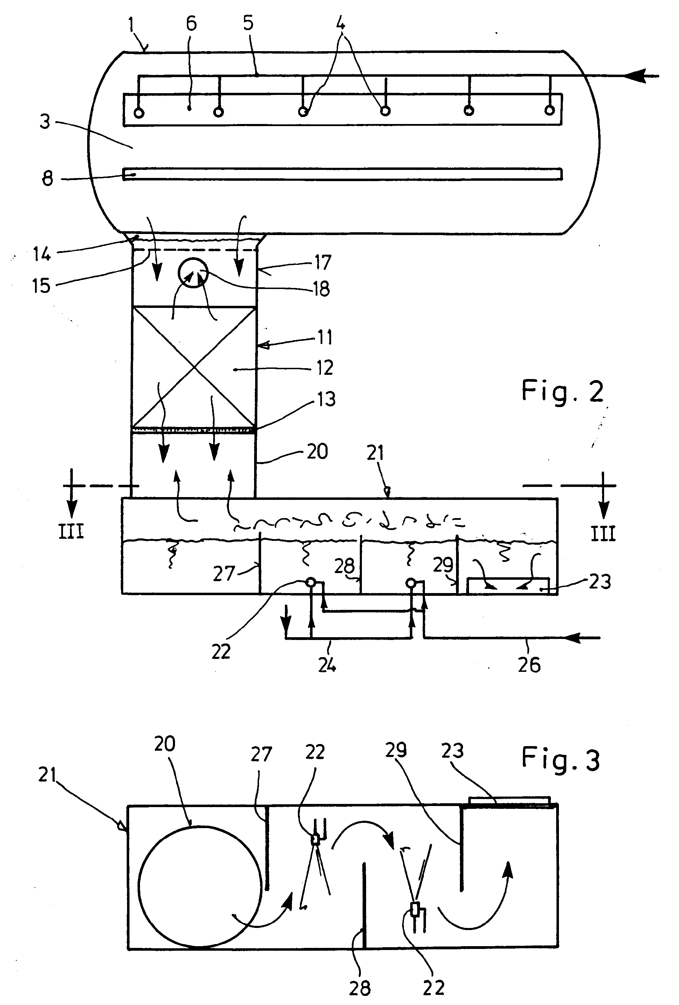

Gemäss Fig.3 ist das Zusatzwasser in diesem Sammelgefäss zwangsgeführt. Hierzu ist mit den Schikanen 27, 28 und 29 ein eigentlicher mäanderförmiger Strömungskanal gebildet, der am Wehr 23 endet. Dieses Wehr sorgt für eindeutige Strömungsverhältnisse im System. In diesem Kanal wird die restliche Entgasung des Zusatzwassers vorgenommen. Dies geschieht mittels Dampfblasen, die in den Dampfzerteilungsmittel 22 erzeugt werden. Diese Mittel sind vorzugsweise handelsübliche Zweiphasendüsen, die sowohl mit Flüssigkeit als auch mit Dampf beaufschlagt werden. Sie sind so bemessen, dass sich an der Austrittsmündung Dampfblasen mit einem Durchmesser von ca. 1 mm bilden. Geeignet sind grundsätzlich Dampfblasen mit einem Durchmesser zwischen 0.5 und 2 mm. Im Strömungskanal sind in den beiden mittleren Mäandern derartige Dampfzerteilungsmittel 22 vorgesehen. Die Düsen selbst selbst sind in einer gewissen Tiefe, bspw. 0.5 m unterhalb des Wasserniveaus angeordnet. Ihre Austrittsmündung ist jeweils horizontal gerichtet, unter anderm, um die Verweilzeit beim Aufsteigen durch die Flüssigkeit zu verlängern.

Die Anspeisung der beiden Düsen erfolgt einerseits über eine Wasserleitung 24, die hier vom Kondensatorboden abzweigt und in der eine Pumpe 25 angeordnet ist. Abweichend hiervon kann die Wasserleitung jedoch genau so gut vom nicht gezeigten Speisewasserstrang, und zwar vorteilhafterweise hinter der üblichen Kondensatpumpe abzweigen. In dieser Wasserleitung kann ferner ein nicht dargestelltes Drosselorgan vorgesehen sein, um den herrschenden Wasserdruck auf den für die Blasenerzeugung erforderlichen Druck vor Düse herab zu drosseln. Zum andern erfolgt die Anspeisung der beiden Düsen über eine Dampfleitung 26, die ebenfalls in der Regel ein Druckreduzierorgan zur Bereitstellung des richtigen Druckes enthält. Die Dampfquelle selbst kann mehrfacher Art sein: So kann beispielsweise das vor der eigentlichen Dampferzeugung bereits aktive Hilfsdampfsystem angezapft werden, welches für die Bereitstellung von Konservierungsdampf und/oder Stopfbüchsendampf erforderlich ist. Andere mögliche Dampfquellen sind Frischdampf oder Anzapfdampf aus der Turbinenanlage, wobei lediglich darauf zu achten ist, dass jeweils sauerstoffarmer Dampf eingesprüht wird.

Die eigentliche thermische Entgasung, bewirkt durch Energiezufuhr in das im Sammelgefäss langsam zum Wehr hin strömende Zusatzwasser, erfolgt nunmehr durch gleichzeitiges Anspeisen der beiden Düsen mit Kondensat und Dampf. Durch den in den Sprühdüsen erfolgenden Druckabbau verdampft der Teil des eingeführten Kondensates und bildet zusammen mit dem eingeführten Dampf die Dampfblasen vom gewünschten Durchmesser, welche homogen durch das Zusatzwasser aufsteigen. Wassertiefe und Blasendurchmesser sind hinsichtlich Verweilzeit der Blasen so aufeinander abzustimmen, dass einerseits keine Blasen mit dem Zusatzwasser über das Wehr in das Kondensatorinnere gelangen, andererseits jedoch die erforderliche Sauerstoffdesorption durchgeführt werden kann. Die Kinetik dieser Desorption ist hinlänglich bekannt und es braucht an dieser Stelle nicht näher darauf eingegangen zu werden.

Der Dampfverbrauch für die Blasenbildung ist relativ gering und beträgt etwa 1‰ der zu entgasenden Zusatzwassermenge. Der für das Funktionieren der Zweiphasendüsen erforderliche Flüssigkeitsmassenstrom beträgt etwa das Hunderfache des eingedüsten Dampfmassenstromes. Gelangen die Blasen nach einer Verweilzeit zwischen 5 und 10 Sekunden an die Wasseroberfläche, so wird oberhalb dieser Wasserfläche im sonst allseits geschlossenen Sammelgefäss 21 ein Dampfpolster geschaffen, welches sich gegen die Wasserströmungsrichtung zum Gehäuseteil 22 hin bewegt und dann von unten her als Spüldampf in die Packung 12 der zweiten Entgasungsstufe eintritt.

Die Dampfblasen bewirken also im Kreuzstrom mit dem Zusatzwasser dessen endgültige Entgasung durch Senkung der gelösten Inertgasanteile von z.B. 80 ppb auf den gewünschten Wert von beispielsweise 7 ppb. Die Blasenentgasung in der letzten Stufe ist lediglich abhängig von der Anzahl der Dampfzerteilungsmittel und dem eingedüsten Dampfstrom. Der auf diese Art angereicherte Spüldampf hat keine negative Wirkung auf die Trennarbeit der Packung 12.

## Patentansprüche

1. Verfahren zum Aufwärmen und mehrstufigen Entgasen von Zusatzwasser mittels Dampf in einer Stromerzeugungsanlage, wozu Niederdruckdampf aus dem Kondensator der Stromerzeugungsanlage verwendet wird,
- wobei in einer ersten Stufe die Aufwärmung und Austreibung der im Zusatzwasser gelösten Gase auf rein thermodynamischer Basis vor sich geht, in dem das unterkühlte Zusatzwasser in eine Mischkammer eingedüst wird, in welcher zumindest annähernd Kondensatordruck herrscht und in welche ebenfalls Niederdruckabdampf eingeleitet wird;
- wobei in einer zweiten Stufe die weitere Entgasung des aufgewärmten Zusatzwassers auf rein stoffkinetischer Basis vorgenommen wird, in dem das Zusatzwasser von oben her eine stehende Trennsäule durchströmt und darin in innigen Kontakt mit im Gegenstrom durch die Trennsäule geleitetem Spüldampf tritt;
- wobei in einer dritten Stufe das aus der Trennsäule austretende Zusatzwasser in einem Sammelgefäss mit Dampfblasen behandelt wird, welche unterhalb des Wasserspiegels im Sammelbehälter von Dampfzerteilungsmittel erzeugt werden,
- und wobei der aus dem Sammelgefäss austretende Dampf den Spüldampf für die Trennsäule bildet.

2. Kombination eines Kondensators einer Stromerzeugungsanlage und eines Apparates zum Aufwärmen und mehrstufigen Entgasen von Zusatzwasser mittels Dampf zum Durchführen des Verfahrens nach Patentanspruch 1,
- mit einer an der Aussenwand (2) des Kondensators der Stromerzeugungsanlage angeordneten und mit dem Kondensatorinnern über einen Dampfeinlass (6) und einen Dampfauslass (8) kommunizierenden Mischkammer (3), in welcher eine Mehrzahl von Wassereinspritzmitteln (4) angeordnet ist, wobei der Dampfeinlass der Mischkammer gegen den Kondensatorhals (7) öffnet;
- mit einer unterhalb der Mischkammer (3) und mit dieser verbundenen, stehend angeordneten Trennsäule (11), welche an ihrem oberen Ende mit einem Wasserverteiler (15) ausgerüstet ist, wobei in der Wandung (17) der Trennsäule (11) zwischen dem Wasserverteiler (15) und den Elementen (12) der Trennsäule (11) eine Verbindung (18, 19) zum Kondensatorinnern abzweigt;
- sowie mit einem unterhalb der Trennsäule (11) angeordneten und mit dieser verbundenen Sammelgefäss (21), in welchem Dampfzerteilungsmittel (22) angebracht sind und welches über ein Wehr (23) mit dem Kondensatorinnern verbunden ist.

3. Kombination nach Patentanspruch 2, dadurch gekennzeichnet, dass die Mischkammer (3) sich in Rohrlängsrichtung des Kondensators erstreckt.

4. Kombination nach Patentanspruch 2, dadurch gekennzeichnet, dass die Mischkammer (3) von vorzugsweise zylindrischer Form (1) ist, wobei sowohl ihre Dampfeinströmung (6) als auch ihre Dampfauströmung (8) tangential ausgebildet ist.

5. Kombination nach Patentanspruch 2, dadurch gekennzeichnet, dass das Sammelgefäss (21) als mäanderförmiger Strömungskanal konfiguriert ist, in welchem die Dampfzerteilungsmittel (22) voneinander beabstandet angeordnet sind .

6. Kombination nach Patentanspruch 2, dadurch gekennzeichnet, dass die Dampfzerteilungsmittel Zweiphasendüsen sind, die sowohl von vorzugsweise sauerstoffarmen Dampf als auch von rezirkuliertem Kondensat beaufschlagt sind und die mit horizontaler Austrittsmündung ausgerichtet sind.

## Claims

1. Process for the preheating and multi-stage degassing of make-up water by means of steam in a power generation installation, for which purpose low-pressure steam from the condenser of the power generation installation is used,
- in a first stage, the preheating and stripping of the gases dissolved in the make-up water proceeding on a purely thermodynamic basis, the subcooled make-up water being injected into a mixing chamber which is at least approximately under the condenser pressure and into which low-pressure waste steam is also introduced,
- in a second stage, the further degassing of the preheated make-up water is carried out on a purely mass-kinetic basis, the make-up water flowing downwards through an upright separation column and coming therein into intimate contact with flushing steam passed through the separation column in counter-current,
- in a third stage, the make-up water leaving the separation column being treated in a receiver with steam bubbles which are generated by steam-dispersing means below the water level in the receiver, and
- the steam leaving the receiver forming the flushing steam for the separation column.

2. Combination of a condenser of a power generation installation and equipment for the preheating and multi-stage degassing of make-up water by means of steam for carrying out the process according to Claim 1, having
- a mixing chamber (3) which is located on the outside wall (2) of the condenser of the power generation installation and communicates with the condenser interior via a steam inlet (6) and steam outlet (8) and in which a plurality of water injection means (4) are arranged, the steam inlet of the mixing chamber opening towards the condenser neck (7),
- a separation column (11) which is located upright underneath the mixing chamber (3) and connected thereto and which is fitted at its upper end with a water distributor (15), a connection (18, 19) to the condenser interior branching off in the wall (17) of the separation column (11) between the water distributor (15) and the elements (12) of the separation column (11),
- and a receiver (21) which is located underneath the separation column (11) and connected thereto and in which steam-dispersing means (22) are fitted and which is connected via a weir (23) to the condenser interior.

3. Combination according to Claim 2, characterized in that the mixing chamber (3) extends in the longitudinal direction of the condenser tubes.

4. Combination according to Claim 2, characterized in that the mixing chamber (3) preferably has a cylindrical shape (1), both its steam inflow (6) and its steam outflow (8) being designed to be tangential.

5. Combination according to Claim 2, characterized in that the receiver (21) is configured as a meandering flow channel in which the steam-dispersing means (22) are arranged at a mutual distance.

6. Combination according to Claim 2, characterized in that the steam-dispersing means are two-phase nozzles which are charged both with preferably low-oxygen steam and recirculated condensate and which are aligned with a horizontal outlet orifice.

## Revendications

1. Procédé pour le réchauffage et le dégazage à plusieurs étages d'eau d'appoint au moyen de vapeur dans une installation de production d'électricité, pour lequel on utilise de la vapeur à basse pression provenant du condenseur de l'installation de production d'électricité
- dans lequel, dans un premier étage, le réchauffage et l'extraction des gaz dissous dans l'eau d'appoint sont opérés sur une base purement thermodynamique, où l'eau d'appoint sous-refroidie est injectée dans une chambre de mélange dans laquelle règne au moins approximativement la pression du condenseur et dans laquelle est également introduite une vapeur perdue à basse pression;
- dans lequel, dans un deuxième étage, le dégazage ultérieur de l'eau d'appoint réchauffée est réalisé sur la base de la pure cinétique des matières, où l'eau d'appoint circule de haut en bas à travers une colonne de séparation dressée et y est mise en contact intime avec une vapeur de balayage conduite à contre-courant à travers la colonne de séparation;
- dans lequel, dans un troisième étage, l'eau d'appoint sortant de la colonne de séparation est traitée dans un récipient collecteur avec des bulles, qui sont produites sous la surface de l'eau dans le récipient collecteur par des moyens de division de la vapeur;
- et dans lequel la vapeur sortant du récipient collecteur forme la vapeur de balayage pour la colonne de séparation.

2. Combinaison d'un condenseur d'une installation de production d'électricité et d'un appareil pour le réchauffage et le dégazage à plusieurs étages d'eau d'appoint au moyen de vapeur destiné à la mise en oeuvre du procédé de la revendication 1,
- avec une chambre de mélange (3) disposée à la paroi extérieure (2) du condenseur de l'installation de production d'électricité et communiquant avec l'intérieur du condenseur par une entrée de vapeur (6) et une sortie de vapeur (8), dans laquelle sont disposés une pluralité de moyens d'injection de vapeur (4), l'entrée de vapeur dans la chambre de mélange s'ouvrant vers le col (7) du condenseur;
- avec une colonne de séparation (11) dressée sous la chambre de mélange (3) et reliée à celle-ci, qui est équipée d'un répartiteur d'eau (15) à son extrémité supérieure, une liaison (18, 19) vers l'intérieur du condenseur étant dérivée dans la paroi (17) de la colonne de séparation (11) entre le répartiteur d'eau (15) et les éléments (12) de la colonne de séparation (11);
- ainsi qu'avec un récipient collecteur (21) disposé sous la colonne de séparation (11) et relié à celle-ci, dans lequel sont disposés des moyens (22) de division de la vapeur et qui est raccordé à l'intérieur du condenseur par un déversoir (23).

3. Combinaison suivant la revendication 2, caractérisée en ce que la chambre de mélange (3) s'étend dans le sens longitudinal des tubes du condenseur.

4. Combinaison suivant la revendication 2, caractérisée en ce que la chambre de mélange (3) est de préférence de forme cylindrique (1), dans laquelle tant son entrée de vapeur (6) que sa sortie de vapeur (8) ont une configuration tangentielle.

5. Combinaison suivant la revendication 2, caractérisée en ce que le récipient collecteur (21) est profilé en un canal d'écoulement sinueux, dans lequel sont disposés, à distance l'un de l'autre, les moyens (22) de division de la vapeur.

6. Combinaison suivant la revendication 2, caractérisée en ce que les moyens de division de la vapeur sont constitués par des gicleurs à deux phases, qui sont alimentés aussi bien en vapeur de préférence pauvre en oxygène qu'en condensat recyclé et dont l'embouchure de sortie est orientée horizontalement.
